(19) Europäisches Patentamt
European Patent Office
Office européen des brevets

(11) **EP 4 367 349 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **22737728.0**

(22) Anmeldetag: **23.06.2022**

(51) Internationale Patentklassifikation (IPC):
**E05B 81/06** *(2014.01)*   **E05B 81/82** *(2014.01)*

(52) Gemeinsame Patentklassifikation (CPC):
**E05B 81/82; E05B 81/06; E05B 2047/0058**

(86) Internationale Anmeldenummer:
**PCT/DE2022/100465**

(87) Internationale Veröffentlichungsnummer:
**WO 2023/280346 (12.01.2023 Gazette 2023/02)**

(54) **TÜRSCHLOSS, INSBESONDERE KRAFTFAHRZEUG-TÜRSCHLOSS**

DOOR LOCK, IN PARTICULAR MOTOR VEHICLE DOOR LOCK

SERRURE DE PORTIÈRE, EN PARTICULIER SERRURE DE PORTIÈRE DE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2021 DE 102021117217**

(43) Veröffentlichungstag der Anmeldung:
**15.05.2024 Patentblatt 2024/20**

(73) Patentinhaber: **Kiekert AG**
**42579 Heiligenhaus (DE)**

(72) Erfinder:
• **SCHMITZ, Andreas**
**42551 Velbert (DE)**
• **SZEGENY, Peter**
**51766 Engelskirchen (DE)**
• **INAN, Ömer**
**46282 Dorsten (DE)**

(74) Vertreter: **Kiekert AG Patentabteilung**
**Höseler Platz 2**
**42579 Heiligenhaus (DE)**

(56) Entgegenhaltungen:
**WO-A1-2018/139213    DE-A1- 102014 105 874**
**DE-U1- 202016 105 621    US-B2- 10 138 656**

**Beschreibung**

Die Erfindung betrifft ein Türschloss, insbesondere Kraftfahrzeug-Türschloss, mit einem Gesperre aus im Wesentlichen Drehfalle und Sperrklinke, ferner mit einem elektromotorischen Öffnungsantrieb für das Gesperre, und mit wenigstens einer Notenergiequelle zum Bestromen des Öffnungsantriebes beim Notöffnen des Gesperres, wobei die Notenergiequelle nach Maßgabe einer Steuereinheit mithilfe einer Hauptenergiequelle geladen wird.

Aus Komfortgründen kommen bei Kraftfahrzeug-Türschlössern heutzutage und zunehmend sogenannte Elektroschlösser zum Einsatz. Diese verfügen über den elektromotorischen Öffnungsantrieb, welcher dafür sorgt, dass das Gesperre geöffnet wird. Ein entsprechendes Öffnungssignal für den elektromotorischen Öffnungsantrieb kann in diesem Zusammenhang typischerweise über einen Sensor bzw. Schalter erzeugt werden, der zu diesem Zweck beispielsweise in oder an einem Türaußengriff angebracht sein kann. Selbstverständlich ist auch eine grifflose Beaufschlagung eines derartigen Sensors möglich. Ebenso kann das betreffende Kraftfahrzeug-Türschloss auch drahtlos geöffnet werden. Solche schlüssellosen Fahrzeugsysteme inklusive Notenergiequelle werden beispielsweise in der DE 20 2016 105 621 U1 beschrieben.

Beim gattungsbildenden Stand der Technik nach der US 10,138,656 B2 wird so vorgegangen, dass die Steuereinheit den Ladezustand der Notenergiequelle überwacht und für ein Aufladen der Notenergiequelle mithilfe der von der Hauptenergiequelle zur Verfügung gestellten elektrischen Leistung sorgt. Dabei steht in diesem Zusammenhang insgesamt ein einwandfreier Betrieb auch bei einem Unfall im Vordergrund.

Bei einem elektronischen Schloss mit Stromausfall-Steuerschaltung nach der EP 2 659 075 B1 ist ein Superkondensatorladegerät realisiert, welches mit einem Mikrocontroller verbunden ist. Der Mikrocontroller sorgt während eines normalen Leistungszustandes dafür, dass das Superkondensatorladegerät eingeschaltet wird, wenn ein Ladepegel mindestens eines Superkondensators unter einem gewünschten Pegel liegt. Demgegenüber wird das Superkondensatorladegerät ausgeschaltet, wenn der Ladepegel des betreffenden Superkondensators einen gewünschten Pegel erreicht hat.

Im Rahmen der US 6,914,346 B2 wird eine Kraftfahrzeug-Türschlossanordnung beschrieben, bei der die Notenergiequelle als Superkondensator ausgebildet ist und auf einer elektronischen Leiterplatte montiert wird. Dadurch kann die Notenergiequelle in ein zugehöriges Schlossgehäuse integriert werden.

Aus der DE 10 2014 105874 A1 ist ein Verfahren für den Betrieb eines Kraftfahrzeugschlosses für ein verstellbares Verschlusselement eines Kraftfahrzeugs bekannt, wobei das Kraftfahrzeugschloss mit einer Schlossfalle für den haltenden Eingriff mit einem Schließkeil o. dgl. und einer der Schlossfalle zugeordneten Sperrklinke ausgestattet ist, wobei ein Öffnungshilfsantrieb für das motorische Ausheben der Sperrklinke vorgesehen ist, wobei das Kraftfahrzeugschloss eine Notversorgungsanordnung mit mindestens einem aufladbaren Energiespeicher aufweist und wobei die Spannungsversorgung des Kraftfahrzeugschlosses in einem durch einen vorbestimmten Notfall erzeugten Notbetrieb, insbesondere bei Ausfall einer Zentralbatterie des Kraftfahrzeugs, zumindest zum Teil von dem aufladbaren Energiespeicher übernommen wird. Es wird vorgeschlagen, dass auf die Erfassung eines Notfallwarnsignals hin zumindest ein Energiespeicher aufgeladen wird, wobei das Notfallwarnsignal anzeigt, dass ein vorbestimmter Notfall ansteht.

Schließlich befasst sich das Gebrauchsmuster DE 20 2016 106 542 U1 mit einem Superkondensator-Ladesystem. Das Ladesystem ist zu diesem Zweck mit einem Energiemanagementcontroller ausgerüstet, mit dessen Hilfe das Laden und Entladen wenigstens eines Superkondensators vorgenommen wird. Außerdem ist der Energiemanagementcontroller in der Lage, eine Ladungsmenge detektieren und bestimmen zu können. In Abhängigkeit hiervon wird das Laden fortgesetzt oder gestoppt.

Der Stand der Technik hat sich grundsätzlich bewährt, wenn es darum geht, ganz generell eine Notenergiequelle in die Funktion des Türschlosses mit einzubeziehen und mit ihrer Hilfe Fahrzeugzustände zu beherrschen, bei denen die Hauptenergiequelle durch beispielsweise zu niedrige Spannung oder infolge eines Unfalls nicht (mehr) in der Lage ist, den elektromotorischen Öffnungsantrieb mit der erforderlichen elektrischen Energie zu versorgen, damit dieser das Gesperre wunschgemäß öffnen kann. In diesem Zusammenhang kommen als Notenergiequelle neben herkömmlichen aufladbaren Akkumulatoren zunehmend sogenannte Supercaps oder Superkondensatoren zum Einsatz. Hierbei handelt es sich typischerweise um elektrochemische Kondensatoren, deren Vorteil darin liegt, dass sie im Vergleich zu Akkumulatoren gleichen Gewichts nur etwa 10 % ihrer Energiedichte aufweisen, allerdings ihre Leistungsdichte etwa 10 bis 100 mal so groß ist. Aus diesem Grund können Superkondensatoren deshalb sehr viel schneller ge- und entladen werden im Vergleich zu Akkumulatoren. Außerdem überzeugen sie durch eine hohe Lebensdauer, weil sie sich für deutlich mehr Schaltzyklen als Akkus gleicher Leistung eignen.

Dementsprechend können Superkondensatoren als Notenergiequelle beispielsweise auf Leiterplatten und im Innern eines Schlossgehäuses Platz finden. Allerdings besteht bei Superkondensatoren wie bei jeder Energiequelle bzw. Notenergiequelle das Problem, dass die von ihnen zur Verfügung gestellte elektrische Leistung durch Selbstentladung nach beispielsweise einer längeren Standzeit eines zugehörigen Kraftfahrzeuges soweit abgesunken ist, dass der elektromotorische Öffnungsantrieb nicht mehr in der Lage ist, das Gesperre notöffnen zu können. Eine ähnliche Problematik ergibt sich, wenn die elektrische Verbindung zwischen der Notenergiequelle und der Hauptenergiequelle infolge beispielsweise eines Unfalls oder Crashs gerissen oder unterbrochen ist. In der Regel wird die Notenergiequelle mit Beginn des Betriebes des Kraftfahrzeuges aufgeladen. Denn dann steht über den Generator oder beispielsweise Rekuperatoren genügend elektrische Energie zur Verfügung, um den betreffenden Ladevorgang zu absolvieren.

Kommt es nun jedoch zu einem Unfall oder einer sonstigen Unterbrechung der Verbindung zwischen der Hauptenergiequelle und der Notenergiequelle unmittelbar nach Fahrtantritt, so besteht die Gefahr, dass die Notenergiequelle zu diesem Zeitpunkt nicht über ausreichend gespeicherte Energie verfügt, um bei einem anschließenden Notöffnen das Gesperre öffnen zu können. Hierbei sorgt typischerweise der elektromotorische Öffnungsantrieb dafür, dass eine Sperrklinke von ihrem Eingriff mit der Drehfalle abgehoben wird, sodass im Anschluss hieran die Drehfalle beispielsweise federunterstützt oder infolge von Türgummikräften öffnet und einen zuvor gefangenen Schließbolzen freigibt. Erst dann kann die zugehörige Kraftfahrzeug-Tür geöffnet werden. Hier will die Erfindung insgesamt Abhilfe schaffen.

Der Erfindung liegt das technische Problem zugrunde, ein derartiges Türschloss und insbesondere Kraftfahrzeug-Türschloss so weiterzuentwickeln, dass ein Notöffnen auch unmittelbar nach Fahrtantritt möglich ist.

Zur Lösung dieser technischen Problemstellung ist ein gattungsgemäßes Türschloss und insbesondere Kraftfahrzeug-Türschloss im Rahmen der Erfindung dadurch gekennzeichnet, dass die Notenergiequelle geladen wird, sobald die Steuereinheit ein Entriegelungssignal für das Gesperre empfängt.

Hierbei geht die Erfindung zunächst einmal von der Erkenntnis aus, dass das Entriegelungssignal für das Gesperre zeitlich der Inbetriebnahme eines zugehörigen Kraftfahrzeuges mithilfe beispielsweise einer Starteinrichtung immer vorgeschaltet ist bzw. vorgeschaltet sein muss, sofern eine Kraftfahrzeug-Tür und damit das zugehörige Kraftfahrzeug-Türschloss einen Schließzustand aufweist. Bei der fraglichen Entriegelung und dem damit verbundenen Entriegelungssignal für das Gesperre kommt es im Allgemeinen dazu, dass bei einem mechanisch arbeitenden Kraftfahrzeug-Türschloss beispielsweise eine Betätigungshebelkette vom Türaußengriff bis zum Gesperre geschlossen wird, sodass im Anschluss hieran eine manuelle Beaufschlagung des Türaußengriffes zum Abheben der Sperrklinke von ihrem rastenden Eingriff mit der Drehfalle genutzt werden kann.

Im Rahmen der vorliegenden Erfindung ist regelmäßig eine mechanische Betätigungshebelkette nicht realisiert. Dementsprechend korrespondiert die Entriegelung des Kraftfahrzeug-Türschlosses im Anschluss an den Empfang des Entriegelungssignals dazu, dass ein beispielsweise dem Türaußengriff zugeordneter Sensor oder Schalter angesteuert bzw. wirksam gesetzt wird und Betätigungen des Türaußengriffes erfassen kann. Wenn folglich im Nachgang der Türaußengriff und damit der Sensor oder Schalter betätigt werden, wird das entsprechende Folgesignal als Öffnungssignal interpretiert, sodass dann der elektromotorische Öffnungsantrieb zum Normalöffnen des Gesperres bestromt wird.

Erst jetzt kann die Kraftfahrzeug-Tür geöffnet werden und gibt den Zugang eines zutrittswilligen Benutzers zum Innenraum frei. Der Benutzer muss dann anschließend in der Regel die Starteinrichtung betätigen, damit das Kraftfahrzeug los fährt und die Hauptenergiequelle im Stand der Technik die Notenergiequelle laden kann. Erfindungsgemäß erfolgt dieser Ladevorgang jedoch zeitlich deutlich davor, nämlich wird durch das Entriegelungssignal für das Gesperre eingeleitet. Da die Steuereinheit den Ladevorgang der Notenergiequelle seitens der Hauptenergiequelle vorgibt, überwacht und steuert, sorgt der Empfang des Entriegelungssignals seitens der Steuereinheit erfindungsgemäß unmittelbar dafür, dass die Notenergiequelle geladen wird. Das alles gelingt - wie beschrieben - zeitlich bevor die Starteinrichtung (das Zündschloss) betätigt oder beaufschlagt wird. Dadurch lässt sich in der Regel die Notenergiequelle innerhalb der Zeitspanne vom Empfang des Entriegelungssignals bis zum Starten mithilfe der Starteinrichtung meistens so weit aufladen, dass zumindest ein einmaliger Öffnungsvorgang mithilfe des elektromotorischen Öffnungsantriebes im Anschluss gelingt. D. h., die erwähnte Zeitspanne reicht meistens aus, damit die Notenergiequelle einen Mindestladezustand erreicht, welcher dazu korrespondiert, dass wenigstens der zuvor beschriebene und einmalige Öffnungsvorgang seitens des elektromotorischen Öffnungsantriebes absolviert werden kann.

Folglich ist die Erfindung erstmals in der Lage, auch dann für ein Notöffnen des zugehörigen Kraftfahrzeug-Türschlosses sorgen zu können, wenn es unmittelbar beim oder im Anschluss an das Losfahren mit dem zugehörigen Kraftfahrzeug zu einem Unfall kommen sollte. D. h., ein Unfall direkt nach Fahrtantritt kann auf diese Weise beherrscht werden, weil die Notenergiequelle auch in einem solchen Fall aufgrund des erreichten Mindestladezustandes in der Lage ist, den elektromotorischen Öffnungsantrieb beim Notöffnen derart ansteuern zu können, dass das Gesperre sicher geöffnet wird. Dadurch sind im Endeffekt auch etwaige mechanische Redundanzen entbehrlich, was besondere konstruktive und kostenmäßige Vorteile nach sich zieht.

Nach vorteilhafter Ausgestaltung wird das Entriegelungssignal drahtlos und/ oder drahtgebunden an die Steuereinheit übermittelt. Im Falle eines drahtlosen Entriegelungssignals kann beispielsweise so gearbeitet werden, dass ein schlüsselloser Zugang im Sinne eines "keyless entry" realisiert ist, wie dies beispielhaft in der zuvor bereits in Bezug genommenen DE 20 2016 105 621 U1 beschrieben wird. Kommt es dagegen bei einer drahtgebundenen Übermittlung des Entriegelungssignals an die Steuereinheit, wird meistens so vorgegangen, dass über einen eingesteckten Schlüssel oder einen betätigten Sensor die Berechtigung des zutrittswilligen Bedieners abgefragt und verifiziert wird, sodass im Anschluss hieran das Entriegelungssignal erzeugt und drahtgebunden an die Steuereinheit übermittelt wird, damit diese unmittelbar und im Anschluss hieran dafür sorgt und auch sorgen kann, dass die Notenergiequelle mithilfe der Hauptenergiequelle geladen wird.

Zu diesem Zweck wird meistens so vorgegangen, dass die Steuereinheit nach Empfang des Entriegelungssignals die zuvor bereits besprochene Starteinrichtung überbrückt und die Hauptenergiequelle direkt zur Notenergiequelle durchschleift. D. h., im Gegensatz zum Stand der Technik läuft die elektrische Energieversorgung der Notenergiequelle seitens der Hauptenergiequelle zu Anfang nicht über die Starteinrichtung und ist hiervon auch nicht abhängig. Vielmehr sorgt die Steuereinheit nach Empfang des Entriegelungssignals dafür, dass die Hauptenergiequelle direkt mit der Notenergiequelle zu ihrer Aufladung verbunden wird. Dabei spielt es keine Rolle, dass die Starteinrichtung zu diesem Zeitpunkt noch nicht betätigt oder beaufschlagt worden ist.

Nach weiterer vorteilhafter Ausgestaltung wird so vorgegangen, dass die Notenergiequelle mit einer erhöhten Anfangsstromstärke zu Beginn des Ladevorganges beaufschlagt wird. Diese erhöhte Anfangsstromstärke wird hauptsächlich bis zum Erreichen des Mindestladezustandes beibehalten. Wie zuvor bereits erläutert, korrespondiert der Mindestladezustand der Notenergiequelle dazu, dass mithilfe des Mindestladezustandes der Öffnungsantrieb wenigstens einmal beaufschlagt werden kann, um das Gesperre öffnen zu können.

Nach Erreichen des Mindestladezustandes wird die Notenergiequelle im Allgemeinen mit einer reduzierten Normalstromstärke beaufschlagt. Diese reduzierte Normalstromstärke reflektiert dabei meistens eine maximale Lebensdauer der Notenergiequelle. D. h., die reduzierte Normalstromstärke ist so bemessen und ausgelegt, dass die Notenergiequelle eine maximale Lebensdauer erreicht.

Die Steuereinheit sorgt in diesem Zusammenhang dafür, dass die Ladestromstärke und/oder Ladespannung der Notenergiequelle jeweils überwacht werden, in der Regel die Ladestromstärke und/oder die Ladespannung mithilfe der Steuereinheit geregelt werden. Außerdem können in der Steuereinheit verschiedene zeitabhängige Strom-/Spannungsverläufe hinterlegt sein. Die Strom-/Spannungsverläufe kommen dabei je nach eingesetzter Notenergiequelle, elektromotorischem Öffnungsantrieb sowie Hauptenergiequelle wahlweise zum Einsatz. D. h., je nachdem wie hoch beispielsweise der elektrische Energiebedarf des elektromotorischen Öffnungsantriebes im konkreten Einzelfall bemessen ist, wird die Anfangsstromstärke und ihr zeitlicher Verlauf vorgegeben, um den notwendigen Mindestladezustand zu erreichen. In diesem Kontext spielt natürlich auch die jeweils eingesetzte Notenergiequelle eine Rolle, ob beispielsweise ein Akkumulator, ein Superkondensator oder mehrere Superkondensatoren zum Einsatz kommen und wie diese beschaffen sind, d. h. wie schnell sie beispielsweise geladen werden können.

Schließlich empfiehlt die Erfindung, dass als Notenergiequelle ein oder mehrere Superkondensatoren zur Anwendung kommen. Der betreffende Superkondensator oder die mehreren Superkondensatoren können dabei auf einer obligatorischen Leiterplatte im Innern eines Schlossgehäuses aufgenommen werden. Selbstverständlich ist auch eine externe Anbringung außerhalb des Schlossgehäuses möglich und wird von der Erfindung mit umfasst.

Im Ergebnis wird ein Türschloss und insbesondere Kraftfahrzeug-Türschloss zur Verfügung gestellt, welches gewährleistet, dass die Notenergiequelle in der Regel unmittelbar nach einem Startvorgang des zugehörigen Kraftfahrzeuges soweit aufgeladen ist bzw. den Mindestladezustand aufweist, damit selbst bei einem Unfall unmittelbar nach Fahrtantritt ein Notöffnen des Gesperres gelingt. Hierdurch ist die Sicherheit enorm gesteigert und kann ganz grundsätzlich auf mechanische Redundanzen verzichtet werden. Hierin sind die wesentlichen Vorteile zu sehen.

Im Folgenden wird die Erfindung anhand einer lediglich ein Ausführungsbeispiel darstellenden Zeichnung näher erläutert, es zeigen:

Fig. 1 das erfindungsgemäße Türschloss in Gestalt eines Kraftfahrzeug-Türschlosses in einer Übersicht und

Fig. 2 ein zeitabhängiges Signal des Ladestromes für die Notenergiequelle schematisch.

In den Figuren ist ein Türschloss dargestellt, bei dem es sich im Rahmen des Beispielfalls um ein Kraftfahrzeug-Türschloss handelt. Dieses verfügt in seinem grundsätzlichen Aufbau über ein Gesperre 1, 2 aus im Wesentlichen Drehfalle 1 und Sperrklinke 2. Das Gesperre 1, 2 wechselwirkt mit einem angedeuteten Schließbolzen oder Schlosshalter 3, der kraftfahrzeugseitig vorgesehen ist, wohingegen das Gesperre 1, 2 in der Regel im Innern einer nicht näher dargestellten Kraftfahrzeug-Tür seine Anordnung findet.

Das Gesperre 1, 2 ist zusammen mit einem elektromotorischen Öffnungsantrieb 4 im Innern eines Gehäuses 5 angeordnet. Außerdem erkennt man im Innern des Gehäuses 5 noch eine Notenergiequelle 6 sowie eine Steuereinheit 7. Mithilfe der Notenergiequelle 6 kann der Öffnungsantrieb 4 beim Notöffnen des Gesperres 1, 2 bestromt werden. Im Regelfall und im Normalbetrieb wird der Öffnungsantrieb 4 jedoch mithilfe einer Hauptenergiequelle 8 bestromt.

Man erkennt, dass sowohl die Notenergiequelle 6 als auch die Hauptenergiequelle 8 jeweils an die Steuereinheit 7 einerseits und den elektromotorischen Öffnungsantrieb 4 andererseits angeschlossen sind.

Gleiches gilt für die Steuereinheit 7, welche auf diese Weise für die Ansteuerung des elektromotorischen Öffnungsantriebes 4 sowohl beim Öffnen im Normalbetrieb bzw. Normalöffnen als auch beim Notöffnen sorgt.

Außerhalb des Schlossgehäuses 5 ist die Hauptenergiequelle 8 angeordnet, die sich in einer nicht näher dargestellten Kraftfahrzeugkarosserie befindet, an welche die ebenfalls nicht ausdrücklich gezeigte Kraftfahrzeug-Tür mit dem im Innern befindlichen Kraftfahrzeug-Schloss angeschlagen ist. Das Kraftfahrzeug bzw. die Kraftfahrzeugkarosserie verfügt grundsätzlich noch über eine Starteinrichtung 9, die ebenfalls an die Steuereinheit 7 angeschlossen ist.

Das gilt auch für einen Sensor 10, bei dem es sich um einen Schalter 10 handelt, der Betätigungen eines Türaußengriffes 11 erfasst. Wenn der Türaußengriff 11 zum Öffnen des Gesperres 1, 2 beaufschlagt wird, gibt der Sensor bzw. Schalter 10 ein Signal an die Steuereinheit 7 ab. Das setzt allerdings voraus, dass die Steuereinheit 7 zunächst für ein Entriegeln des Kraftfahrzeug-Türschlosses sorgt.

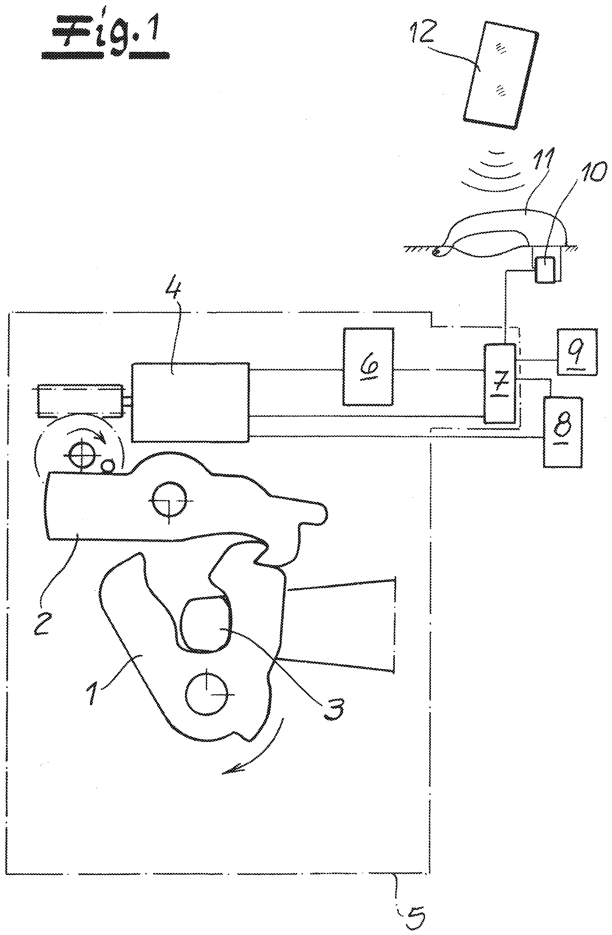

Nach dem Ausführungsbeispiel wird dieses Entriegeln mithilfe eines Entriegelungssignals eingeleitet, welches die Steuereinheit 7 drahtlos empfängt, wie in der Fig. 1 angedeutet ist. Tatsächlich geht das Entriegelungssignal nach dem Ausführungsbeispiel von einer Sende-/Empfangseinheit 12 aus, bei der es sich um einen Funkfernschlüssel, eine Fernbedienung etc. handeln kann. Generell kann an dieser Stelle auch eine Magnetkarte oder ähnliches zum Einsatz kommen, die bei einer Annäherung eines zutrittswilligen Benutzers durch einen Frage-/Antwort-Dialog hinsichtlich der Berechtigung des Benutzers abgefragt wird. So oder so führt eine Annäherung des zutrittswilligen und berechtigten Benutzers im Ausführungsbeispiel dazu, dass das Entriegelungssignal wie dargestellt drahtlos oder auch drahtgebunden an die Steuereinheit 7 übermittelt wird. Das Entriegelungssignal führt dazu, dass der Schalter 10 "scharf" gestellt ist und abgefragt werden kann, um das Gesperre 1, 2 zu öffnen.

Erfindungsgemäß ist die Auslegung nun so getroffen, dass die Notenergiequelle 6 geladen wird, sobald die Steuereinheit 7 das Entriegelungssignal für das Gesperre 1, 2 empfängt. Das Entriegelungssignal stammt nach dem Ausführungsbeispiel und nicht einschränkend von der Sende-/Empfangseinheit 12. Alternativ oder zusätzlich kann das Entriegelungssignal für die Steuereinheit 7 aber auch durch ein Steuergerät und insbesondere Türsteuergerät zur Verfügung gestellt werden, welches im Einzelnen und im Detail nicht dargestellt ist.

Nach Empfang des Entriegelungssignals überbrückt die Steuereinheit 7 die Starteinrichtung 9. Auf diese Weise wird die Hauptenergiequelle 8 direkt zur Notenergiequelle 6 durchgeschleift. D. h., das Entriegelungssignal und sein Empfang durch die Steuereinheit 7 führt unmittelbar dazu, dass die Hauptenergiequelle 8 elektrisch mit der Notenergiequelle 6 verbunden wird und unmittelbar die Notenergiequelle 6 auflädt. Demgegenüber erfolgt ein solcher Ladevorgang im Stand der Technik erst dann, wenn die Starteinrichtung 9 betätigt wird. Derartiges ist erfindungsgemäß nicht erforderlich, weil die Steuereinheit 7 nach Empfang des Entriegelungssignals die Starteinrichtung 9 überbrückt und die Hauptenergiequelle 8 direkt zur Notenergiequelle 6 durchschleift.

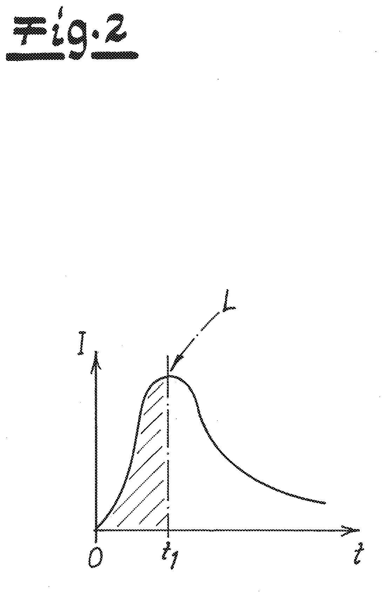

Anhand der Fig. 2 erkennt man nun, wie die Notenergiequelle 6 über die Zeit geladen wird. Tatsächlich ist in der Fig. 2 ein Strom bzw. Ladestrom I gegenüber der Zeit t dargestellt. Man erkennt, dass die Notenergiequelle 6 mit einer erhöhten Anfangsstromstärke zu Beginn des Ladevorganges beaufschlagt wird. Die erhöhte Anfangsstromstärke und der folgerichtig erhöhte Ladestrom I zur Beaufschlagung der Notenergiequelle 6 wird dabei so lange beibehalten, bis ein in der Fig. 2 angedeuteter Mindestladezustand L der Notenergiequelle 6 erreicht ist. Dieser Mindestladezustand L der Notenergiequelle 6 korrespondiert dazu, dass die Notenergiequelle 6 soweit aufgeladen ist, dass mit ihrer Hilfe der elektromotorische Öffnungsantrieb 4 zumindest einmal bei einem Notöffnungsvorgang des Gesperres 1, 2 in der Lage ist, das Gesperre 1, 2 öffnen zu können.

Tatsächlich korrespondiert der Mindestladezustand L der Notenergiequelle 6 entsprechend der Darstellung nach der Fig. 2 dazu, dass das Integral der zeitabhängigen Stromstärke bzw. Ladestromstärke I (t) einen bestimmten und vom elektromotorischen Öffnungsantrieb 4 abhängigen Wert für das einmalige Öffnen erreicht. Sobald die Notenergiequelle 6 den Mindestladezustand

$$L = \int_0^{t1} I\,(t)\,dt$$

erreicht hat, wird die Notenergiequelle 6 mit einer demgegenüber reduzierten Normalstromstärke nach Erreichen des Mindestladezustandes L beaufschlagt, wie man anhand des zeitabhängigen Verlaufes der Stromstärke I im Anschluss an den schraffiert in der Fig. 2 dargestellten Mindestladezustand L nachvollziehen kann.

Die im Anschluss an den Mindestladezustand L beobachtete reduzierte Normalstromstärke reflektiert dabei eine maximale Lebensdauer der Notenergiequelle 6. In jedem Fall ist die Auslegung so getroffen, dass die Steuereinheit 7 die Ladestromstärke I entsprechend der Darstellung nach der Fig. 2 und/oder die Ladespannung an der Notenergiequelle 6 überwacht. Die Überwachung der Ladestromstärke I bzw. der Ladespannung seitens der Steuereinheit 7 meint erfindungsgemäß, dass die Ladestromstärke I und/oder die Ladespannung für die Notenergiequelle 6 gesteuert und/oder geregelt mithilfe der Steuereinheit 7 vorgegeben werden. Außerdem ist die Auslegung so getroffen, dass in der Steuereinheit 7 verschiedene zeitabhängige Stromverläufe, wie sie in der Fig. 2 dargestellt sind, hinterlegt sind. Mithilfe dieser Stromverläufe oder auch korrespondierender Spannungsverläufe können unterschiedlich ausgebildete Notenergiequellen 6, variierender elektromotorische Öffnungsantriebe 4 sowie unterschiedliche Ausprägungen der Hauptenergiequelle 8 reflektiert werden und lässt sich der jeweilige Strom-/ Spannungsverlauf an die spezifischen Gegebenheiten anpassen.

Bei der Notenergiequelle 6 handelt es sich nach dem Ausführungsbeispiel um einen oder mehrere Superkondensatoren, die nicht nur im Innern des Schlossgehäuses 5 angeordnet sind, sondern darüber hinaus auf einer nicht ausdrücklich dargestellten Leiterplatte bzw. Platine ihren Platz findet. Gleiches gilt für die Steuereinheit 7.

**Bezugszeichenliste:**

| | |
|---|---|
| 1, 2 | Gesperre |
| 1 | Drehfalle |
| 2 | Sperrklinke |
| 3 | Schließbolzen oder Schlosshalter |
| 4 | Öffnungsantrieb |
| 5 | Schlossgehäuse |
| 6 | Notenergiequelle |
| 7 | Steuereinheit |
| 8 | Hauptenergiequelle |
| 9 | Starteinrichtung |
| 10 | Sensor |
| 11 | Türaußengriff |
| 12 | Sende-/Empfangseinrichtung |
| t | Zeit |
| I | Ladestrom |
| L | Mindestladezustand |

**Patentansprüche**

1. Türschloss, insbesondere Kraftfahrzeug-Türschloss, mit einem Gesperre (1, 2) aus im Wesentlichen Drehfalle (1) und Sperrklinke (2), ferner mit einem elektromotorischen Öffnungsantrieb (4) für das Gesperre (1, 2), mit wenigstens einer Notenergiequelle (6) zum Bestromen des Öffnungsantriebes (4) beim Notöffnen des Gesperres (1, 2), und wenigstens einer Steuereinheit (7), wobei die Notenergiequelle (6) nach Maßgabe der Steuereinheit (7) des Türschlosses mithilfe einer Hauptenergiequelle (8) geladen wird,
**dadurch gekennzeichnet, dass** die Notenergiequelle (6) geladen wird, sobald die Steuereinheit (7) ein Entriegelungssignal für das Gesperre (1, 2) empfängt.

2. Türschloss nach Anspruch 1, **dadurch gekennzeichnet, dass** das Entriegelungssignal drahtlos und/oder drahtgebunden an die Steuereinheit (7) übermittelt wird.

3. Türschloss nach Anspruch 1 oder 2, **dadurch gekennzeichnet, dass** die Steuereinheit (7) nach Empfang des Entriegelungssignals eine Starteinrichtung (9) überbrückt und die Hauptenergiequelle (8) direkt zur Notenergiequelle (6) durchschleift.

4. Türschloss nach einem der Ansprüche 1 bis 3, **dadurch gekennzeichnet, dass** die Notenergiequelle (6) mit einer erhöhten Anfangsstromstärke zu Beginn des Ladevorganges beaufschlagt wird.

5. Türschloss nach Anspruch 4, **dadurch gekennzeichnet, dass** die erhöhte Anfangsstromstärke bis zum Erreichen eines Mindestladezustandes (L) beibehalten wird.

6. Türschloss nach Anspruch 5, **dadurch gekennzeichnet, dass** die Notenergiequelle (6) mit einer reduzierten Normalstromstärke nach Erreichen des Mindestladezustandes (L) beaufschlagt wird.

7. Türschloss nach Anspruch 5 oder 6, **dadurch gekennzeichnet, dass** die reduzierte Normalstromstärke eine maximale Lebensdauer der Notenergiequelle (6) reflektiert.

8. Türschloss nach einem der Ansprüche 1 bis 7, **dadurch gekennzeichnet, dass** die Steuereinheit (7) die Ladestromstärke und/oder Ladespannung der Notenergiequelle (6) überwacht, insbesondere regelt.

9. Türschloss nach einem der Ansprüche 1 bis 8, **dadurch gekennzeichnet, dass** in der Steuereinheit (7) verschiedene zeitabhängige Strom-/Spannungsverläufe je nach eingesetzter Notenergiequelle (6), elektromotorischem Öffnungsantrieb (4) sowie Hauptenergiequelle (8) hinterlegt sind.

10. Türschloss nach einem der Ansprüche 1 bis 9, **dadurch gekennzeichnet, dass** die Notenergiequelle (6) als ein oder mehrere Superkondensatoren ausgebildet ist.

**Claims**

1. Door latch, in particular a motor vehicle door latch, comprising a locking mechanism (1, 2) consisting substantially of a catch (1) and a pawl (2), the door latch further comprising an electromotive opening drive (4) for the locking mechanism (1, 2), at least one emergency power source (6) for supplying current to the opening drive (4) during the emergency opening of the locking mechanism (1, 2), and at least one control unit (7), the emergency power source (6) being charged in accordance with a control unit (7) of the door latch using a main power source (8),

**characterized in that** the emergency power source (6) is charged as soon as the control unit (7) receives an unlocking signal for the locking mechanism (1, 2).

2. Door latch according to claim 1, **characterized in that** the unlocking signal is transmitted to the control unit (7) wirelessly and/or by wire.

3. Door latch according to either claim 1 or claim 2, **characterized in that** the control unit (7) bridges a starting device (9) after receiving the unlocking signal and connects the main power source (8) directly to the emergency power source (6).

4. Door latch according to any of claims 1 to 3, **characterized in that** the emergency power source (6) is supplied with an increased initial current intensity at the beginning of the charging process.

5. Door latch according to claim 4, **characterized in that** the increased initial current intensity is maintained until a minimum charge state (L) has been reached.

6. Door latch according to claim 5, **characterized in that** the emergency power source (6) is supplied with a reduced normal current intensity after the minimum charge state (L) has been reached.

7. Door latch according to either claim 5 or claim 6, **characterized in that** the reduced normal current intensity reflects a maximum service life of the emergency power source (6).

8. Door latch according to any of claims 1 to 7, **characterized in that** the control unit (7) monitors, in particular regulates, the charging current intensity and/or charging voltage of the emergency power source (6).

9. Door latch according to any of claims 1 to 8, **characterized in that** different time-dependent current/voltage curves are stored in the control unit (7) depending on the emergency power source (6), electromotive opening drive (4) and main power source (8) used.

10. Door latch according to any of claims 1 to 9, **characterized in that** the emergency power source (6) is designed as one or more supercapacitors.

**Revendications**

1. Serrure de porte, en particulier serrure de porte de véhicule automobile, comportant un mécanisme de verrouillage (1, 2) constitué sensiblement d'un loquet rotatif (1) et d'un cliquet de verrouillage (2), comportant en outre un entraînement d'ouverture (4) à moteur électrique pour le mécanisme de verrouillage (1, 2), comportant au moins une source d'énergie de secours (6) permettant d'alimenter l'entraînement d'ouverture (4) lors de l'ouverture d'urgence du mécanisme de verrouillage (1, 2), et au moins une unité de commande (7), dans laquelle la source d'énergie de secours (6) est chargée à l'aide d'une source d'énergie principale (8) en fonction de l'unité de commande (7) de la serrure de porte, **caractérisée en ce que** la source d'énergie de secours (6) est chargée dès que l'unité de commande (7) reçoit un signal de déverrouillage pour le mécanisme de verrouillage (1, 2).

2. Serrure de porte selon la revendication 1, **caractérisée en ce que** le signal de déverrouillage est transmis sans fil et/ou par fil à l'unité de commande (7).

3. Serrure de porte selon la revendication 1 ou 2, **caractérisée en ce que** l'unité de commande (7) court-circuite un dispositif de démarrage (9) après la réception du signal de déverrouillage et boucle la source d'énergie principale (8) directement vers la source d'énergie de secours (6).

4. Serrure de porte selon l'une des revendications 1 à 3, **caractérisée en ce que** la source d'énergie de secours (6) est sollicitée par une intensité de courant initial plus élevée au début du processus de charge.

5. Serrure de porte selon la revendication 4, **caractérisée en ce que** l'intensité de courant initial plus élevée est maintenue jusqu'à ce qu'un état de charge minimal (L) soit atteint.

6. Serrure de porte selon la revendication 5, **caractérisée en ce que** la source d'énergie de secours (6) est sollicitée par une intensité de courant normal réduite après que l'état de charge minimal (L) a été atteint.

7. Serrure de porte selon la revendication 5 ou 6, **caractérisée en ce que** l'intensité de courant normal réduite reflète une durée de vie maximale de la source d'énergie de secours (6).

8. Serrure de porte selon l'une des revendications 1 à 7, **caractérisée en ce que** l'unité de commande (7) surveille, en particulier régule, l'intensité de courant de charge et/ou la tension de charge de la source d'énergie de secours (6).

9. Serrure de porte selon l'une des revendications 1 à 8, **caractérisée en ce que** différentes courbes courant/tension dépendant du temps sont enregistrées dans l'unité de commande (7) pour chacun parmi la source d'énergie de secours (6), l'entraînement d'ouverture (4) à moteur électrique et la source d'énergie principale (8) utilisés.

10. Serrure de porte selon l'une des revendications 1 à 9, **caractérisée en ce que** la source d'énergie de secours (6) est réalisée sous la forme d'un ou de plusieurs supercondensateurs.

# Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202016105621 U1
- US 10138656 B2
- EP 2659075 B1
- US 6914346 B2
- DE 102014105874 A1
- DE 202016106542 U1